# NEUE EUROPÄISCHE PATENTSCHRIFT

(11) **EP 0 044 310 B2**
(45) Veröffentlichungstag und Bekanntmachung des Hinweises auf die Entscheidung über den Einspruch: **10.02.1993**
(45) Hinweis auf die Patenterteilung: 12.09.1984
(21) Anmeldenummer: 80902232.0
(22) Anmeldetag: 27.11.1980
(51) Int. Cl.: B05B 15/04, B01D 46/04

(54) **VORRICHTUNG ZUM PULVERBESCHICHTEN VON WERKSTÜCKEN MIT EINER DAS WERKSTÜCK ZEITWEISE AUFNEHMENDEN SPRÜHKABINE**
WORK PIECE POWDER COATING INSTALLATION INCLUDING A CABIN TO TEMPORARY RECEIVE THE WORK PIECE
INSTALLATION DE REVETEMENT DE PIECES D'OEUVRE PAR POUDRE COMPORTANT UNE CABINE POUR RECEVOIR TEMPORAIREMENT LA PIECE D'OEUVRE

(30) Priorität: 30.01.1980 DE 3003158
(43) Veröffentlichungstag der Anmeldung: 27.01.1982
(73) Patentinhaber: J. Wagner GmbH, W-7990 Friedrichshafen 1 (DE)
(72) Erfinder: VÖHRINGER, Gerhard Friedrich, D-7990 Friedrichshafen (DE); HESTERMANN, Gerhard, D-7990 Friedrichshafen (DE)
(74) Vertreter: Tetzner, Volkmar, Dr.-Ing. Dr. jur.
(86) Internationale Anmeldenummer: EP8000139
(87) Internationale Veröffentlichungsnummer: WO8102117

(56) Entgegenhaltungen:
- DE-A- 1 752 212
- DE-A- 1 907 709
- DE-A- 1 951 361
- DE-A- 1 962 698
- DE-A- 2 025 381
- DE-A- 2 262 084
- DE-A- 2 731 123
- DE-A- 2 748 840
- DE-A- 2 759 220
- DE-A- 2 809 020
- DE-A- 2 813 854
- DE-A- 2 835 474
- DE-B- 2 037 644
- DE-U- 6 901 700
- FR-A- 2 369 878
- GB-A- 1 315 671
- US-A- 3 719 030
- US-A- 3 791 341

## Beschreibung

Die Erfindung betrifft eine Vorrichtung zum Pulverbeschichten von Werkstücken mit einer das Werkstück zeitweise aufnehmenden Sprühkabine, die eine Sprühöffnung für eine Pulversprühpistole und ferner eine Pulverkabinenöffnung aufweist, hinter der ein an ein Sauggebläse angeschlossenes Filteraggregat angebracht ist, das Bestandteil einer Pulvereinheit ist, welche den Pulverkreislauf unmittelbar beeinflussende Aggregate mit einem Pulverbehälter in sich funktionsfähig zusammenfaßt, wobei die Pulverkabinenöffnung sich weitgehend über die gesamte rückseitige Begrenzung eines Sprühraumes erstreckt und von einer teildurchlässigen Abschirmung nach Art eines Gitters, einer Jalousie oder einer Streifen blende überdeckt ist und wobei das obere Ende des Filteraggregates durch zwischen dem Filteraggregat und einer Reingaseinheit vorgesehene Saugöffnungen mit dem Saugraum des Sauggebläses in Verbindung steht und unterhalb des Filteraggregates und seitlich unterhalb des zum unteren Rand der Pulverkabinenöffnung hin fördernden Kabinenbodens eine Pulversammelvorrichtung derart angebracht ist, daß das Rücklaufpulver unter Schwerkraftwirkung in den Pulverbehälter gefördert wird.

Bei einer bekannten Vorrichtung dieser Art (DE-U-6 901 700) ist das Filteraggregat fest mit der Sprühkabine verbunden und es sind nur die unterhalb des Filteraggregates angeordneten Pulverbehälter auswechselbar vorgesehen. Die Sieb- und Aufbereitungsvorrichtung ist als getrenntes Aggregat unabhängig von der aus Sprühkabine und Filteraggregat bestehenden Einheit aufgestellt, so daß das in dem jeweiligen Pulverbehälter aufgefangene Pulver von Hand zur Sieb- und Aufbereitungsvorrichtung gebracht werden muß. Dies erfordert nicht nur einen zusätzlichen Arbeitsaufwand, sondern auch zusätzliche konstruktive Maßnahmen für den luftdichten Anschluß der Pulverbehälter an das Filteraggregat und an die Aufbereitungsvorrichtung; ferner werden Verschlußorgane für die Pulverbehälter während deren Transport zur Aufbereitungsvorrichtung benötigt. Ein wesentlicher Nachteil dieser bekannten Vorrichtung besteht obendrein auch noch darin, daß bei einem Farbwechsel des Beschichtungspulvers, bei einem Ersatz der Filterelemente sowie bei einer Reparatur des Sauggebläses eine längere Unterbrechung des Betriebs der Sprühkabine in Kauf genommen werden muß. Bei dieser bekannten Vorrichtung ist also nicht nur der Pulverkreislauf von aufwendigen Maßnahmen begleitet, sondern auch die Funktionssicherheit, d.h. die Möglichkeit, die Vorrichtung weitgehend störungsfrei benutzen zu können, eingeschränkt. Ferner läßt die Reinigung des Filteraggregats zu wünschen übrig.

Weiterhin ist bereits eine Vorrichtung bekannt (DE-A-2 262 084), bei der alle den Pulverkreislauf beeinflussenden Aggregate zu einer verfahrbaren Einheit zusammengefaßt sind, wobei noch eine mit Druckluft betriebene Abreinigungsvorrichtung für die Filterelemente vorgesehen ist. Über die Anordnung der Pulverkabine ist aber nichts vermerkt und außerdem weist die Vorrichtung einen großen Bedienungs-und konstruktiven Aufwand auf.

Es ist schließlich auch schon eine Vorrichtung bekannt geworden (DE-A-2 025 381), bei der ein Großteil der nicht am Werkstück haften bleibenden Kunststoffteile auf einen schrägen Kabinenboden fallen und von dort direkt unter Umgehung der Filtervorrichtung in einen Sammelbehälter gelangen, so daß die Filtereinrichtung nicht mehr so stark belastet wird. Bei dieser bekannten Vorrichtung ist jedoch die gesamte Pulvereinheit fest mit der Sprühkabine verbunden, so daß sich hierbei Schwierigkeiten bei einem Farbwechsel und der damit verbundenen Reinigung der Pulvereinheit ergeben.

Die Erfindung geht aus von der eingangs geschilderten Vorrichtung und verfolgt die Aufgabe, diese Vorrichtung derart weiterzubilden, daß der Pulverkreislauf vereinfacht und die Funktionssicherheit bzw. Funktionsbereitschaft der Vorrichtung, insbesondere durch bessere Reinhaltung und Reinigung, verbessert wird.

Zur Lösung dieser Aufgabe besteht die Weiterbildung der eingangs erläuterten Vorrichtung darin, daß die Pulverkabinenöffnung der in einer Stirnwandebene der Sprühkabine vorgesehenen Sprühöffnung gegenüberliegend angebracht ist, daß ferner unterhalb des Filteraggregates und des Kabinenbodens eine die Pulversammelvorrichtung bildende Sieb- und Aufbereitungseinrichtung derart angebracht ist, daß das Rücklaufpulver unter Schwerkraftwirkung durch die Sieb- und Aufbereitungseinrichtung hindurch in den Pulverbehälter gefördert wird, der mit einer Einleitvorrichtung zum Einleiten des wiederaufbereiteten Sprühpulvers in eine zur Sprühpistole führende Leitung versehen ist, daß alle den Pulverkreislauf unmittelbar beeinflussenden Aggregate in der Pulvereinheit funktionsfähig zusammengefaßt sind, die als Ganzes von der Sprühkabine abnehmbar ist, und daß das Filteraggregat über die Pulverkabinenöffnung verteilt eine Anzahl hängend angeordneter, langgestreckter Filterelemente aufweist, denen periodisch aufeinanderfolgend betätigbare Druckluftabreinigungsdüsen zugeordnet sind, wobei jeweils in eine von mehreren Gruppen von Filterelementen ein Druckluftstoß eingeleitet wird.

Aufgrund dieser Ausgestaltung ist die gesamte Pulvereinheit seitlich neben der Sprühkabine angeordnet und kann ohne weiteres leicht abgenommen und gegen eine andere Einheit ausgetauscht werden, wobei lediglich die Kabinenwände mittels eines Staubsaugers zu reinigen sind. Da das Filteraggregat aus dem Raum oberhalb des Ableitungsbodens heraus zur Seite hin verlagert ist, kann dieser Boden als Kabinenboden ohne Vergrößerung der Gesamthöhe so weit hochgelegt werden, daß sich das Pulver von seitlich oben in die Aufbereitungseinheit einleiten läßt, also zunächst gesiebt und dadurch von Agglomeraten und Verunreinigungen befreit wird, bevor es in den darunterliegenden Pulverbehältergelangt, aus dem es in bekannter Weise mittels Injektoren und dergl. zum Sprühvorgang wieder abgesaugt wird. Bis zu diesem Absaugvorgang kann somit die gesamte Pulverförderung im Prinzip durch Schwerkraftwirkung erfolgen, was allein schon zu hoher Betriebssicherheit führt. Durch die seitliche Anordnung des Filteraggregates kann eine Kabinenwand weitgehend eingespart werden, und der kontinuierliche Betrieb des Filteraggregates stellt sicher, daß auch kontinuierlich ohne Betriebsunterbrechung, praktisch ohne Pulververluste gearbeitet werden kann.

Die erfindungsgemäße Ausgestaltung vereinigt somit die wesentlichen Vorteile eines raschen Wechsels der gesamten Pulvereinheit mit der geringen Belastung der Filterelemente, da der größte Teil der nicht an dem Werkstück haften bleibenden Pulverteile zu Boden fällt und dort unter Schwerkraftwirkung, also ohne zusätzliche Fördermaßnahmen, direkt in die Aufbereitungsvorrichtung gelangt, was hohe Filterstandzeiten ermöglicht. Zudem ist die ganze Pulverführung so gestaltet, daß das Rücklaufpulver ausschließlich durch die Schwerkraftwirkung bis zum Pulverbehälter gefördert wird, nicht also zwischenzeitlich fürAufbereitungsvorgänge oder dergl. wieder befördert werden muß. Damit wird die Aufbereitung mit verhältnismäßig geringem Aufwand und gesteigerter Funkt ionssicherheit erreicht.

Durch die Verteilung der Filterelemente über die ganze Kabinenöffnung wird eine Vergleichmäßigung der Saugwirkung und damit der Luftströmung erreicht, was zu einer Gleichförmigkeit der Beschichtung führt, durch welche maßgeblich die Funktionssicherheit bestimmt ist.

Diese Gleichförmigkeit der Beschichtung und damit die Funktionssicherheit der Vorrichtung wird zudem noch dadurch gesteigert, daß den einzelnen Filterelementen gesonderte Druckluftabreinigungsdüsen zugeordnet sind und sie periodisch aufeinanderfolgend dadurch abgereinigt werden, daß jeweils in eine von mehreren Gruppen von Filterelementen ein Druckluftstoß eingeleitet wird. Die Druckluftstöße sind bei dieser an sich bekannten Technik kräftig und schlagartig kurz. Bei einem Abreinigungsschlag vergrößert sich jedoch die Strömungsgeschwindigkeit durch die restlichen Filterelemente hierdurch. Daher bleibt die Saugluftströmung insgesamt ebenso wie der Beschichtungsvorgang praktisch unverändert, so daß auch ohne Rücksicht auf die Abreinigungsvorgänge weitergesprüht werden kann. Diese Abreinigungsvorgänge brauchen wegen der bereits erwähnten geringen Belastung der Filterelemente nur in größeren Zeitabständen durchgeführt zu werden.

Nach einer besonderen Ausführungsform der Erfindung wird die Pulvereinheit mittels Schnellschlußkupplungen an eine insbesondere ortsfest gehaltene Reingaseinheit angeschlossen, die ein Sauggebläse und weitere Anschlüsse für Energie, wie Elektrizität und Druckluft, aufweist.

Mit dem hier eingeführten Begriff "Reingaseinheit" ist klargestellt, daß auf diese Weise möglichst alle Teile der Vorrichtung erfaßt werden sollten, die vom Farbwechsel unberührt sind. Dies kann ein Sauggebläse oder auch ein Anschluß an ein solches Sauggebläse sein, ebenso alle Steuer- und Leitungsteile, die nicht unbedingt mit Pulver in Berührung kommen müssen, beispielsweise auch ein Hochspannungsgenerator, sofern die Hochspannung nicht von einer zentralen Anlage bezogen wird.

Im Prinzip kann die ReingaseinheitmitderSprühkabine fest verbunden bzw. von dieser getragen werden. Als zweckmäßig hat es sich jedoch erwiesen, die Sprühkabine gegenüber der Reingaseinheit ortsbeweglich anzuordnen, insbesondere an diese ausschließlich über die Pulvereinheit anzuschließen. Dies eröffnet dann die weitergehende Möglichkeit, mit der Pulvereinheit auch die Sprühkabine auszuwechseln, ohne daß die Verbindung zwischen diesen gelöst werden muß. Es ist ohne weiteres ersichtlich, daß auf diese Weise der Farbwechsel gegenüber allen anderen bekannten Anordnungen wesentlich beschleunigt werden kann.

Die von der Sprühkabine getrennte Reingaseinheit kann beispielsweise an einem hochliegenden Träger, insbesondere der Gebäudedecke angebracht und ihr eine im Bodenbereich angeordnete Anschlußeinheit für Druckluft und/oder Elektrizität zugeordnet werden. Diese Einheit läßt sich unmittelbar am Boden und ggf. in Kontakt mit der Aufbereitungseinheit, evtl. auch an einem die Reingaseinheit tragenden Pfosten anbringen. Stets können beide energieführenden Einheiten zusammengeschlossen und ggf. gemeinsam abgesichert werden. Sie lassen sich auch durch eine Schlauch- und Kabelverbindung zusammenschließen, sofern man durch eine solche Verbindung nicht unmittelbar die Aufbereitungseinheit anschließen will.

Zweckmäßigerweise ist das Gehäuse der Reingaseinheit mit einer insbesondere waagrecht angeordneten Zwischenwand versehen, die Saugraum und Druckraum des Sauggebläses voneinander trennt, wobei in der Auslaßöffnung des Druckraumes ein Nachfilter angeordnet ist, das auch beim Bruch eines Filters verhindert, daß Pulver in den Betriebsraum gelangt.

Nach einem weiteren Erfindungsvorschlag wird eine Aufbereitungseinheit mit Siebmaschine, Pulverbehälter und mehreren Anschlüssen für Sprühpistolen mittels Ringdichtung und Schnellverschlußkupplung an einer Filtereinheit aufgehängt und bildet dann mit dieser die teilbare Pulvereinheit. Auf diese Weise wird es dann möglich, auch die Filtereinheit zwischenzeitig abzureinigen, ohne daß jedoch die Aufbereitungseinheit entleert wird.

Die Sprühkabine weist zweckmäßigerweise einen zur Waagrechten geneigten, ggf. an eine Rüttelvorrichtung angeschlossenen Boden auf, dessen unterer Rand etwas durch eine Einlaßöffnung des Gehäuses der Pulvereinheit hindurchragt, so daß das Pulver auch ohne spezielle Transportmittel der Aufbereitungseinheit zugeführt wird.

Wenigstens die Pulvereinheit, insbesondere auch die Sprühkabine, sollte mit reibungsmindernden Auflagemitteln, wie Rollen oder Auflageplatten, aus gleitgünstigem Kunststoff, wie PTFE, versehen sein, um das Verschieben dieser Teile beim Farbwechsel zu erleichtern.

Die Zeichnung gibt die Erfindung beispielsweise wieder. Es zeigen:
Fig.1 einen schematischen Querschnitt durch eine erfindungsgemäße Vorrichtung nach der Linie I-I in Fig.5,
Fig.2 einen Schnitt durch diese Vorrichtung nach der Linie 11-11 in Fig.1,
Fig.3 eine teilweise nach der Linie 111-111 in Fig.1 geschnittene Ansicht von oben,
Fig.4 eine verkleinerte Gesamtansicht der Vorrichtung in der Fig.1 entsprechenden Ansichtsrichtung,
Fig.5 eine Ansicht dieser Vorrichtung von links in Fig.4 gesehen,
Fig.6 einen Schnitt nach der Linie VI-VI wie in Fig.4 durch eine Sprühstraße mit zwei unter seitlichem Abstand aneinandergefügten Vorrichtungen,
Fig.7 eine Einhängekabine mit einer an einem hochragenden Pfosten angebrachten Reingaseinheit und
Fig.8 die Befestigung der Reingaseinheit auf der Sprühkabine.

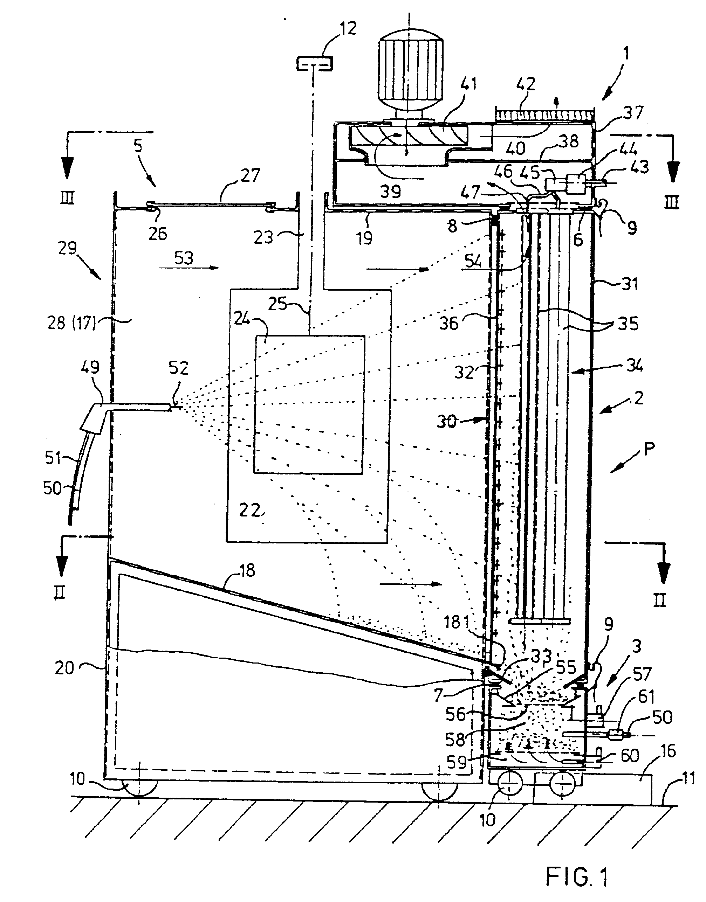

Die in der Zeichnung, insbesondere in den Fig.1-5 gezeigte Vorrichtung besteht im wesentlichen aus einer raumfest angeordneten Reingaseinheit 1, an der von unten eine Filtereinheit 2 aufgehängt ist, an derwiederum eine Aufbereitungseinheit 3 aufgehängt ist, die zusammen mit der Filtereinheit eine Pulvereinheit P bildet. Diese Pulvereinheit ist mittels ihrer Filtereinheit 2 seitlich an eine Sprühkabine 5 angekuppelt. Dabei sind zwischen den einzelnen Einheiten jeweils Ringdichtungen 6, 7, 8 eingeschaltet, und die Verbindung erfolgt mittels Schnellschlußkupplungen 9.

Durch den Schließweg zweier hintereinander geschalteter Kupplungen ist im Betrieb die Aufbereitungseinheit 3 mit ihren Rollen 10 vom Boden 11 angehoben. Nach dem Absenken der Pulvereinheit P durch Lösen einer Kupplung kann diese somit gemeinsam mit der Sprühkabine 5 seitlich unter der Reingaseinheit 1 beim Farbwechsel herausgefahren und gegen eine andere Kombination P + 5 ausgetauscht werden.

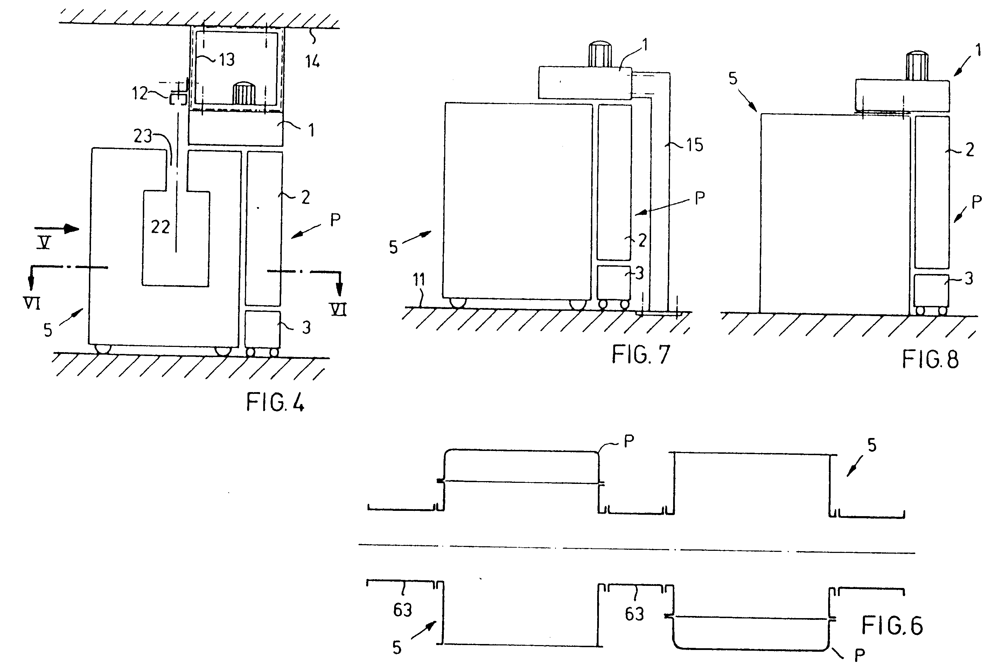

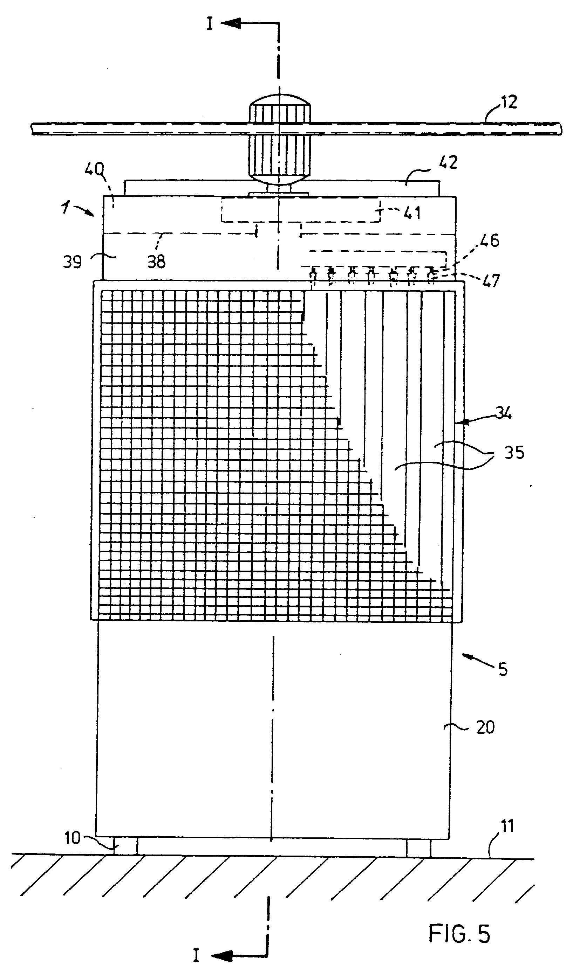

Begnügt man sich jedoch mit einem Austausch der Pulvereinheit und reinigt die Innenwände der Pulverkabine mit einem Staubsauger, so kann die Sprühkabine nach Lösen der Kupplung zur Pulvereinheit an ihrem Ort verbleiben. Die Sprühkabine 5 kann dann ggf. ortsfest als Träger der Reingaseinheit 1 ausgebildet und mit dieser fest verbunden sein, wie dies Fig.8 zeigt. In diesem Fall lassen sich auch weitere Installationen, wie sie für den Betrieb der Aufbereitungseinheit 3 benötigt werden, an der Kabine 5 vorsehen.

Sofern man sich die Möglichkeitdes Kabinenaustauschs zum beschleunigten Farbwechsel erhalten will, läßt sich die Reingaseinheit 1, wie dies Fig.4 zeigt, ggf. mit einer Transportbahnschiene 12, durch Bänder 13 an der Gebäudedecke 14 aufhängen.

Es kann allerdings auch nach der Darstellung in Fig.7 die Reingaseinheit 1 von einem Pfosten 15 gehalten werden, der im Boden 11 verankert ist.

Wie die Bezeichnung "Reingaseinheit" schon erkennen läßt, soll diese erste Einheit möglichst alle Teile und Funktionsgruppen enthalten, die nicht unbedingt mit Pulver in Berührung kommen müssen. Die hochliegende Anordnung empfiehlt sich hier wegen der kürzeren Luftwege beim Anschluß an das ebenfalls relativ hochliegende Filteraggregat. Es muß aber einerseits die Aufbereitungseinheit 3 wenigstens mit Druckluft versorgt werden, und es ist für eine Anschlußmöglichkeit der Sprühpistolen an Hochspannung zu sorgen. Dabei kann der Anschluß an Fig.8 über die ortsfeste Kabine oder aber ebenso wie bei den Ausführungen Fig.4 und Fig.7 über ein kombiniertes Pendel-Schlauchkabel erfolgen. Man kann auch - ggf. zusätzlich zur Reingaseinheit 1 - eine gesonderte Anschlußeinheit 16 vorsehen (vgl. Fig.1), die sich mit der Aufbereitungseinheit durch geeignete Kupplungen verbinden läßt und entweder ortsfest am oder gar im Boden 11 bzw. bei der Ausführung Fig.7 am Fußteil des Pfostens 15 angebracht ist. Sofern eine solche Anschlußeinheit zusätzlich als zweckmäßig erachtet wird, sollte sie jedoch möglichst über die Reingaseinheit 1 versorgt und zusammen mit dieser abgesichert werden.

Die Sprühkabine 5 besteht im wesentlichen aus zwei Seitenwänden 17, die durch einen etwas erhöht liegenden Boden 18, eine Decke 19 und eine unterhalb des Bodens angebrachte niedrige Stirnwand 20 verbunden sind. Bei Durchlaufkabinen ist in den Seitenwänden eine Durchlauföffnung 22 mit einem sich bis in die Decke erstreckenden Schlitz 23 für ein Werkstück 24 und dessen Aufhängung 25 eingeformt. Im linken Teil der Decke ist ferner eine Öffnung 26 angebracht, die durch eine Beleuchtungs-Glasscheibe 27 abgedeckt ist. Auf diese Weise kann die Raumbeleuchtung zum Ausleuchten des Sprühraumes 28 ausgenutzt werden. Jedenfalls ist an der Kabine selbst nicht unbedingt eine gesonderte Lampe mit Elektroanschluß anzubringen.

Der Boden 18 ist zurAbleitung des im Sprühraum herabfallenden Pulvers ohne Vibrationshilfe um 13° zur Waagerechten geneigt. Mit Verwendung einer bekannten Vibrationseinrichtung läßt sich die Neigung bis unter ca. 6° herabsetzen und dadurch die Kabinenhöhe entsprechend mindern.

Der Sprühraum 28 ist von seiner Sprühöffnung 29 zur Pulver-Kabinenöffnung 30 hin nur durch die Neigung des Bodens 18 etwas erweitert, im übrigen als glatter Durchgangskanal ausgebildet, wobei die endseitigen Öffnungen nur oben durch schmale Flanschteile etwas eingeengt sind, an welchen sich auch die Ringdichtung 8 für das Gehäuse 31 der Filtereinheit 2 abstützt.

Der Pulver-Kabinenöffnung 30 liegt eine im wesentlichen gleichgroße Einlaßöffnung 32 des Gehäuses 31 gegenüber, wobei der untere, abgebogene Randteil 181 des Bodens 18 etwas durch die Öffnung 32 hindurchragt und damit die Überleitung des vom Boden abgleitenden Pulvers in das Innere des Gehäuses 31 und damit dessen Trichter 33 sicherstellt.

Das Gehäuse 31 umschließt ein Filteraggregat 34 aus einer Anzahl Filterkerzen 35 in einer an sich bekannten Konstruktion mit sternförmigem Querschnitt und austauschbaren Filter-Papiermanschetten. Diese Filterkerzen 35 sind in zwei Reihen gestaffelt hinter der Kabinenöffnung 30 und einem zwischengeschalteten Schutzgitter 36 angeordnet. Ihr unteres Ende ist abgeschlossen, ihr oberes jeweils in einer Saugöffnung der Deckplatte des Gehäuses 31 befestigt.

Das Gehäuse 37 der Reingaseinheit 1 ist durch eine waagrechte Zwischenwand 38 unterteilt in einen unteren Saugraum 39 und einen oberen Druckraum 40 für ein Sauggebläse 41, dessen Ansaugstutzen in der Zwischenwand 38 sitzt. In der Deckwand des Gehäuses 37 ist ein Nachfiiter42 angebracht, durch das die vom Sauggebläse geförderte Luft unmittelbar in den Arbeitsraum entweichen kann. Auch beim Bruch einer Filterkerze läßt sich so verhindern, daß Pulver in den Arbeitsraum gelangt.

In dem für die Luftführung nicht benötigten Raum des Gehäuses 37 sind weitgehend alle für den Betrieb der Sprühanlage benötigten Teile untergebracht, die nicht mit dem Pulverkreislauf unmittelbar in Berührung kommen. Sofern die Hochspannung für das elektrostatische Feld nicht von einem außenliegenden Anschluß bezogen werden kann, läßt sich dort ein Hochspannungsgenerator anbringen. Druckluft wird normalerweise von einem gebäudefesten Netz durch eine Leitung 43 zugeführt. Evtl. kann aber auch ein Kompressor unmittelbar eingebaut werden.

Nach der Darstellung in Fig.1 mündet die Leitung 43 wenigstens mittelbar in einen Windkessel 44, der ständig unter Leitungsdruck steht und an den eine Steuervorrichtung 45 angeschlossen ist. Diese Steuervorrichtung enthält oder wird gesteuert durch ein Zeitschaltglied und öffnet jeweils kurzzeitig einen Strömungsweg vom Windkessel 44 zu einem von etwa drei oder vier Anschlüssen. Diese Anschlüsse stehen jeweils über mehrere Leitungen 46 in Verbindung mit einzelnen Düsen 47 in einem Lochblech 48, das eine in der Unterseite des Gehäuses 37 vorgesehene Öffnung überdeckt. Eine jede dieser Düsen liegt über der Mitte der Saugöffnung einer Filterkerze 35.

Im Normalbetrieb ist in der Sprühöffnung 29 eine (oder mehrere) Sprühpistolen 49 bekannter Bauart angeordnet, die mit der Aufbereitungseinheit 3 durch wenigstens einen Schlauch 50 und auf dem gleichen oder anderen Wege über eine Hochspannungsleitung 51 mit einer Hochspannungsversorgung verbunden ist. Die bzw. jede Pistole kann stationär gehalten oder in bestimmter Weise bewegt werden. Während bei ortsfester Halterung des Werkstückes in Einhängekabinen entsprechend den Fig.7 und 8 die Pistole möglichst zwei Bewegungskomponenten erhalten sollte, ist es bei einem Längstransport entsprechend Fig.1 hinreichend, wenn die Pistole in lotrechter Ebene hin- und hergehend bewegt bzw. verschwenkt wird.

Von einer Hochspannungselektrode 52 baut sich dabei zum Werkstück 24 ein elektrostatisches Feld auf, das die von der Pistole versprühten Pulverpartikel einfängt und sie zum Werkstück hinleitet. Der Niederschlags-Wirkungsgrad, d.h. der Anteil der am Werkstück abgelagerten Pulverteilchen an der versprühten Menge, liegt dabei in der Regel zwischen 50 und 95%.

Die nicht am Werkstück anhaftenden Teile werden einmal infolge ihrer Bewegungsenergie und zum anderen durch die in gleicher Richtung weiterströmende Förderluft nach rechts in Fig.1 und damit unmittelbar auf das Filteraggregat 34 zu bewegt, wie dies die Pfeile 53 andeuten. Während ein Teil der Pulverpartikel unter Schwerkraftwirkung herabfällt und auf dem Boden 18 unterhalb des Filteraggregates in den Trichter 33 gelangt, wird ein weiterer Teil von dem Saugluftstrom (Pfeil 54) mitgerissen und an die auswechselbare Papierhülle der Filterkerzen 35 geführt, wo sie auf Grund der dort herrschenden Druckdifferenz außen festgehalten werden.

Die Saugluft kann dabei auf ganzer Fläche durch die Papiermanschetten hindurchdringen, gelangt aus den oberen Saugöffnungen durch das Lochblech 48 in den Saugraum 39 und wird durch den Nachfiiter42 ausgeblasen.

Durch die Düsen 47 wird nun periodisch aufeinanderfolgend jeweils in eine von mehreren Gruppen von Filterkerzen ein Druckluftstoß durch Entladen des Windkessels 44 eingeleitet, wodurch die Filtermanschetten schlagartig nach außen aufgebaucht werden und eine möglicherweise außen gebildete Schicht aus abgelagerten Pulverpartikeln absprengen. Diese Partikel fallen dann unmittelbar in den Trichter 33.

Die Saugluftströmung als solche bleibt dadurch praktisch unverändert, da sich im Augenblick des Abreinigungsschlages die Strömungsgeschwindigkeit durch die restlichen Filterkerzen hindurch vergrößert. Es kann daher zweckmäßig sein, die an eine Abreinigungsgruppe angeschlossenen Kerzen jeweils etwa gleichmäßig auf die Länge des Filteraggregates zu verteilen. Da aber der Saugstrom unverändert bleibt, kann auch kontinuierlich ohne Rücksicht auf die Abreinigungsvorgänge weitergesprüht werden.

Die Aufbereitungseinheit 3 weist oberseitig zunächst einen unmittelbar unterhalb des Trichters 33 liegenden und etwa gleich beschaffenen Einlaßtrichter 55 auf, unter dem sich eine Siebmaschine 56 befindet, die durch einen Druckluftmotor 57 angetrieben wird. Der darunter befindliche Pulverbehälter 58 ist so groß, daß er als Vorratsbehälter dienen kann. Auch nachzufüllendes Pulver muß dann zunächst auf die Siebmaschine 56 aufgegeben werden und wird mit dem aus dem Umlauf entnommenen Pulver zerkleinert bzw. aufbereitet.

Eine weitere Aufbereitung erfolgt durch einen Fluidboden 59 mit Druckluftanschluß 60, der ebenso wie der Druckluftmotor 57 nur der besseren Übersicht wegen außen dargestellt ist. Durch den Fluidboden wird das gesamte Pulver aus dem Behälter 58 ständig in Vibration gehalten und von Luft durchströmt, so daß es in der zugeführten gleichmäßigen Verteilung mittels eines Injektors 61 entnommen und dem Schlauch 50 für die Sprühpistolen 49 zugeführt werden kann. In der Regel dürften vier Injektoren mit entsprechenden Schlauchanschlüssen vorgesehen sein.

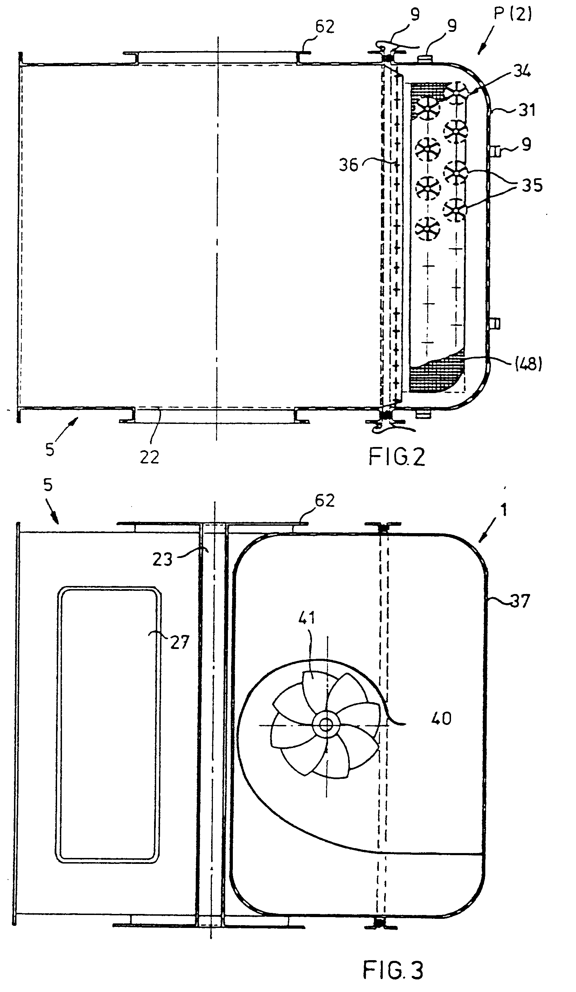

Bei Durchlaufkabinen sind, wie aus den Fig.2 und 3 ersichtlich, rings um die Durchlauföffnung 22 Flanschansätze 62 angebracht, die es ermöglichen, mehrere Kabinen unmittelbar aneinanderzuflanschen. Um jedoch zu verhindern, daß sich die elektrischen Felder und die Luft- bzw. Gasströmungen in benachbarten Kabinen gegenseitig beeinflussen, sollten nach der Darstellung in Fig.6 kurze rohrförmige Tunnelstücke 63 zwischengeschaltet werden. Diese Figur läßt auch erkennen, daß man die Pulvereinheiten P einmal rechts und einmal links anschließt, wenn beispielsweise das Werkstück in der einen Kabine von vorn und in der anderen von hinten besprüht werden soll.

## Patentansprüche

1. Vorrichtung zum Pulverbeschichten von Werkstücken (24) mit einer das Werkstück zeitweise aufnehmenden Sprühkabine (5), die eine Sprühöffnung (29) für eine Pulversprühpistole (49) und ferner eine Pulverkabinenöffnung (30) aufweist, hinter der ein an ein Sauggebläse (41) angeschlossenes Filteraggregat (34) angebracht ist, das Bestandteil einer Pulvereinheit (P) ist, welche den Pulverkreislauf unmittelbar beeinflussende Aggregate (Filteraggregat 34, Siebmaschine 56) mit einem Pulverbehälter (58) in sich funktionsfähig zusammenfaßt, wobei die Pulverkabinenöffnung (30) sich weitgehend über die gesamte rückseitige Begrenzung eines Sprühraumes (28) erstreckt und von einer teildurchlässigen Abschirmung (Schutzgitter 36) nach Art eines Gitters, einer Jalousie oder einer Streifenblende überdeckt ist und wobei das obere Ende des Filteraggregates (34) durch zwischen dem Filteraggregat und einer Reingaseinheit (1) vorgesehene Saugöffnungen mit dem Saugraum (39) des Sauggebläses (41) in Verbindung steht und unterhalb des Filteraggregates (34) und seitlich unterhalb des zum unteren Rand der Pulverkabinenöffnung (30) hin fördernden Kabinenbodens (18) eine Pulversammelvorrichtung derart angebracht ist, daß das Rücklaufpulver unter Schwerkraftwirkung in den Pulverbehälter (58) gefördert wird,
dadurch gekennzeichnet,
daß die Pulverkabinenöffnung (30) der in einer Stirnwandebene der Sprühkabine (5) vorgesehenen Sprühöffnung (29) gegenüberliegend angebracht ist, daß ferner unterhaIb des Filteraggregates (34) und des Kabinenbodens (18) eine die Pulversammelvorrichtung bildende Sieb- und Aufbereitungseinrichtung (Aufbereitungseinheit 3 mit Siebmaschine 56) derart angebracht ist, daß das Rücklaufpulver unter Schwerkraftwirkung durch die Sieb- und Aufbereitungseinrichtung hindurch in den Pulverbehälter (58) gefördert wird, der mit einer Einleitvorrichtung (Injektor 61) zum Einleiten des wiederaufbereiteten Sprühpulvers in eine zur Sprühpistole (49) führende Leitung (50) versehen ist, daß alle den Pulverkreislauf unmittelbar beeinflussenden Aggregate (Filteraggregat 34, Aufbereitungseinheit 3 mit Siebmaschine 56 und Pulverbehälter 58, Einleitvorrichtung 61) in der Pulvereinheit (P) funktionsfähig zusammengefaßt sind, die als Ganzes von der Sprühkabine (5) abnehmbar ist,
und daß das Filteraggregat (34) über die Pulverkabinenöffnung (30) verteilt eine Anzahl hängend angeordneter, langgestreckter Filterelemente (Filterkerzen 35) aufweist, denen periodisch aufeinanderfolgend betätigbare Druckluftabreinigungsdüsen (47) zugeordnet sind, wobei jeweils in eine von mehreren Gruppen von Filterelementen ein Druckluftstoß eingeleitet wird.

2. Vorrichtung nach Anspruch 1, dadurch gekennzeichnet, daß die Pulvereinheit (P) mittels Schnellschlußkupplungen (9) an eine insbesondere ortsfest gehaltene Reingaseinheit (1) anschließbar ist, die ein Sauggebläse (41) und weitere Anschlüsse für Energie, wie Elektrizität und Druckluft aufweist.

3. Vorrichtung nach Anspruch 1 oder 2, dadurch gekennzeichnet, daß die Sprühkabine (5) gegenüber der Reingaseinheit (1) ortsbeweglich angeordnet, insbesondere an diese ausschließlich über die Pulvereinheit (P) anschließbar ist.

4. Vorrichtung nach Anspruch 3, dadurch gekennzeichnet, daß die Reingaseinheit (1) an einem hochliegenden Träger, insbesondere der Gebäudedecke (14) angebracht (Fig.4) und ihr eine im Bodenbereich angeordnete Anschlußeinheit (16) für Druckluft und/oder Elektrizität zugeordnet ist.

5. Vorrichtung nach Anspruch 3, dadurch gekennzeichnet, daß das Gehäuse (37) der Reingaseinheit (1) eine insbesondere waagrecht angeordnete Zwischenwand (38) aufweist, die Saugraum (39) und Druckraum (40) des Sauggebläses (41) voneinander trennt, wobei in der Auslaßöffnung des Druckraumes ein Nachfilter (42) angeordnet ist.

6. Vorrichtung nach einem der Ansprüche 1 bis 5, dadurch gekennzeichnet, daß eine Aufbereitungseinheit (3) mit Siebmaschine (56), Pulverbehälter (58) und mehreren Anschlüssen für Sprühpistolen (49) mittels Ringdichtung (7) und Schnellschlußkupplung (9) an einer Filtereinheit (2) aufgehängt ist.

7. Vorrichtung nach einem der Ansprüche 1 bis 6, dadurch gekennzeichnet, daß die Sprühkabine (5) einen zur Waagerechten geneigten, ggf. an eine Rüttelvorrichtung angeschlossenen Boden (18) aufweist, dessen unterer Rand etwas durch eine Einlaßöffnung (32) des Gehäuses (31) der Pulvereinheit (P) hindurchragt.

8. Vorrichtung nach einem der Ansprüche 1 bis 7, dadurch gekennzeichnet, daß wenigstens die Pulvereinheit (P), insbesondere auch die Sprühkabine (5), mit reibungsmindernden Auflagemitteln, wie Rollen (10) oder Auflageplatten, aus gleitgünstigem Kunststoff, wie PTFE, versehen ist.

## Claims

1. Device for powder-coating workpieces (24), with a spray booth (5) which temporarily receives the workpiece and has a spray opening (29) for a powder spray gun (49) and also a powder booth opening (30) behind which a filter assembly (34) is fitted which is connected to a suction fan (41) and is a component part of a powder unit (P) which functionally combines the assemblies (filter assembly 34, screening machine 56) which directly influence the powder circulation with a powder container (58), wherein the powder booth opening (30) extends largely over the entire rear boundary of a spray chamber (28) and is covered by a partially permeable screen (protective grid 36) in the form of a grid, a louvre blind or a strip shutter, and the upper end of the filter assembly (34) is connected to the suction chamber (39) of the suction fan (41) by suction openings provided between the filter assembly and a clean gas unit (1), and a powder collecting device is fitted below the filter assembly (34) and laterally below the base (18) of the booth which leads towards the lower edge of the powder booth opening (30) in such a way that the return powder is conveyed by the effect of gravity into the powder container (58), characterised in that the powder booth opening (30) is arranged opposite the spray opening (29) provided in one front wall plane of the spray booth, furthermore a screening and preparation device (preparation unit 3 with screening machine 56) which forms the powder collecting device is fitted below the filter assembly (34) and the base (18) of the booth in such a waythatthe return powder is conveyed by t he effect of gravity through the screening and preparation device and into the powder container (58) which is provided a feed device (injector 61) for feeding the reprocessed spray powder into a pipe (50) leading to the spray gun (49), all the assemblies (filter assembly 34, preparation unit 3 with screening machine 56 and powder container 58, feed device 61) which directly influence the powder circulation are functionally combined in the powder unit (P) which can be removed as a whole from the spray booth (5), and the filter assembly (34) has a number of suspended elongate filter elements (filter cartridges 35) which are distributed over the powder booth opening (30) and with which are co-ordinated compressed air cleaning nozzles (47) which are periodically actuated in succession, a pulse of compressed air being introduced in each case into one of several groups of filter elements.

2. Device as claimed in claim 1, characterised in that the powder unit (P) can be connected by means of quick couplings (9) to a clean gas unit (1) which is kept stationary in particular and has a suction fan (41) and additional connections for energy, such as electricity and compressed air.

3. Device as claimed in claims 1 or 2, characterised in that the spray booth (5) is movably arranged opposite the clean gas unit (1) and in particular can be connected to the latter exclusively by means of the powder unit (P).

4. Device as claimed in claim 3, characterised in that the clean gas unit (1) is mounted on an elevated support, particularly the ceiling of the building (14) (Figure 4), and has associated with it a connection unit (16) which is arranged in the base region for compressed air and/or electricity.

5. Device as claimed in claim 3, characterised in that the housing (37) of the clean gas unit (1) has an intermediate wall (38) which is arranged in particular horizontally and separates the suction chamber (39) and the pressure chamber (40) of the suction fan (41) from one another, a second filter (42) being arranged in the outlet opening of the pressure chamber.

6. Device as claimed in any one of claims 1 to 5, characterised in that a preparation unit (3) with screening machine (56), powder container (58) and several connections for spray guns (49) is suspended on a filter unit (2) by means of an annular seal (7) and a quick coupling (9).

7. Device as claimed in any one of claims 1 to 6, characterised in that the spray booth (5) has a base (18) which is inclined relative tothe horizontal and is optionally connected to a vibration device, the lower edge of the said base protruding somewhat through an inlet opening (32) in the housing (31) of the powder unit (P).

8. Device as claimed in any one of claims 1 to 7, characterised in that at least the powder unit (P), but particularly also the spray booth (5), is provided with friction-reducing means, such as rollers (10) or supporting plates which are made from plastics material which favours sliding, such as PTFE.

## Revendications

1. Dispositif de dépôt d'un revêtement pulvérulent sur des pièces (24) placées momentanément dans une cabine de pulvérisation (5) qui comporte une ouverture destinée à un pistolet (49) de projection de poudre ainsi qu'une ouverture (30) derrière laquelle est monté un groupe de filtrage (34) raccordé à un aspirateur (41) et faisant partie d'un bloc à poudre (P) qui réunit de manière fonctionnelle à un réservoir de poudre (58) tous les appareillages intervenant directement sur le circuit de la poudre (appareil de filtrage 34, machine de tamisage 56), ladite ouverture (30) de la cabine s'étendant pratiquement sur la totalité de la cloison arrière d'une chambre de pulvérisation (28) et étant recouverte d'un écran partiellement perméable (grille de protection 36) du type d'une grille, d'une jalousie ou d'un écran à lamelles et l'extrémité supérieure de l'appareil de filtrage (34) communiquant avec la chambre d'aspiration (39) de l'aspirateur (41) par des trous d'aspiration prévus entre l'appareil de filtrage et un bloc (1) à gaz propre et de plus un dispositif collecteur de poudre étant monté sous l'appareil de filtrage (34) et latéralement sous le fond (18) de la cabine qui mène vers le bord inférieur de ladite ouverture (30) de la cabine, de manière que la poudre de ré- cupérat ion soit transportée par gravité dans le réservoir (58), caractérisé en ce que ladite ouverture (30) de la cabine est placée en face de l'ouverture de pulvérisation (29) prévue dans une cloison frontale de la cabine de pulvérisation (5), en ce que, par ailleurs, un dispositif de tamisage et de préparation (groupe de préparation 3 comprenant une machine de tamisage 56) formant le dispositif collecteur de poudre est monté sous l'appareil de filtrage (34) et le fond de la cabine (18) de manière que la poudre de récupéra- t ion soit transportée par gravité dans le réservoir (58) après avoir passé par le dispositif de tamisage et de préparation, ce réservoir étant équipé d'un dispositif (injecteur 61) d'introduction de la poudre de pulvérisation retraitée dans un conduit (50) menant au pistolet de pulvérisation (49), en ce que tous les appareillages intervenant directement dans le circuit de la poudre (appareil de filtrage 34, groupe de préparation 3 comprenant la machine de tamisage 56 et le réservoir 58, dispositif d'introduction 61) soient réunis fonctionnellement dans le bloc à poudre (P) qui forme un module amovible par rapport à la cabine de pulvérisation (50), et en ce que l'appareil de filtrage ( 34) comprend plusieurs éléments filtrants allongés (chemises filtrantes 35) suspendus et répartis au-dessus de ladite ouverture (30) de la cabine, lesdits éléments filtrants étant associés à des buses (47) de nettoyage à l'air comprimé mises en service périodiquement les unes après les autres par une onde d'air comprimé introduite dans l'un de plusieurs groupes d'éléments filtrants.

2. Dispositif selon la revendication 1, caractérisé en ce que le bloc à poudre (P) peut être assemblé par un raccord rapide à un bloc à gaz propre (1) placé en particulier en position fixe et comprenant un aspirateur (41) et d'autres raccords à des sources d'énergie telles que l'électricité et l'air comprimé.

3. Dispositif selon la revendication 1 ou 2, caractérisé en ce que la cabine de pulvérisation (5) est montée mobile par rapport au groupe à gaz propre (1) et peut notamment être raccordée en particulier à ce dernier exclusivement par l'entremise du bloc à poudre (P).

4. Dispositifselon la revendication 3, caractérisé en ce que le bloc à gaz propre (1) est monté sur un support placé en hauteur, en particulier au plafond (14) du bâtiment (figure 4) et il est associé à un bloc (16) de raccordement à une source d'air comprimé et/ou d'électricité qui est placé au niveau du sol.

5. Dispositif selon la revendication 3, caractérisé en ce que l'enveloppe (37) du bloc à gaz propre (1) comprend une cloison intermédiaire (38) qui est notamment horizontale et qui sépare la chambre d'aspiration (39) et la chambre de refoulement (40) de l'aspirateur (41), un filtre d'épuration (42) étant disposé dans l'orifice de sortie de la chambre de refoulement.

6. Dispositif selon l'une des revendications 1 à 5, caractérisé en ce qu'un bloc de traitement (3), comprenant une tamiseuse (56), un réservoir à poudre (58) et plusieurs raccordements à des pistolets de pulvérisation (49), est suspendu à un bloc de filtrage (2) au moyen d'un joint d'étanchéité et d'un raccord rapide (9).

7. Dispositif selon l'une des revendications 1 à 6, caractérisé en ce que la cabine de pulvérisation (5) comporte un fond (18) qui est incliné sur l'horizontale et éventuellement relié à un dispositifvi- breur et dont le bord inférieur pénètre légèrement dans une ouverture d'entrée (32) de l'enveloppe (31) du bloc à poudre (P).

8. Dispositif selon l'une des revendications 1 à 7, caractérisé en ce qu'au moins le bloc à poudre (P) et en particulier aussi la cabine de pulvérisation (5) sont munis d'organes d'appui réducteurs du frottement tels que des roulettes (10) ou des plaques d'appui en matière plastique à faible coefficient de frottement telle que du PTFE.
